## Europäisches Patentamt

## European Patent Office

## Office européen des brevets

(19)

(11) Veröffentlichungsnummer: **0 129 026**
**B1**

(12) # EUROPÄISCHE PATENTSCHRIFT

(45) Veröffentlichungstag der Patentschrift:
**12.08.87**

(51) Int. Cl.⁴: **B 64 D 17/02**

(21) Anmeldenummer: **84104745.9**

(22) Anmeldetag: **27.04.84**

(54) **Aus flexiblem Werkstoff gebildeter Gleitschirm.**

(30) Priorität: **11.06.83 DE 3321194**

(43) Veröffentlichungstag der Anmeldung:
**27.12.84 Patentblatt 84/52**

(45) Bekanntmachung des Hinweises auf die Patenterteilung:
**12.08.87 Patentblatt 87/33**

(84) Benannte Vertragsstaaten:
**FR GB**

(56) Entgegenhaltungen:
**DE-A-2 840 466**
**FR-A-2 041 775**
**US-A-3 412 963**
**US-A-3 972 495**

(73) Patentinhaber: **DORNIER GMBH, Postfach 1420,
D-7990 Friedrichshafen 1 (DE)**

(72) Erfinder: **Idiens, Richard, Dipl.- Ing.,
Lichtenbergstrasse 3, D-7778 Markdorf (DE)**
Erfinder: **Minkler, Bernd, Dipl.- Ing., Nordring 44,
D-8560 Lauf a.d.R. (DE)**

(74) Vertreter: **Landsmann, Ralf, Dipl.- Ing., Kleeweg 3,
D-7990 Friedrichshafen 1 (DE)**

EP 0 129 026 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Gleitfallschirme, mit aus flexiblem Werkstoff gebildeten, die Gleitfallschirmvorderkante bzw. -hinterkante einschliessenden Gewebebahnen, mit durch die Gewebebahnen und zwischen diesen angeordnete Seitenstege gebildeten Stauluftkammern, mit Einströmöffnungen gegen die Anströmrichtung und die Öffnungen überspannenden Gewebebahnen, sowie einem sich in Spannweitenrichtung erstreckenden, formstabilen, jedoch in seinem Volumen verringerbaren, die Profilnase bildenden Formkörper.

Gleitfallschirme der genannten Art werden dafür eingesetzt, Lasten oder Personen aus Fluggeräten abzusetzen und in einer flachen Gleitbahn zu Boden zu bringen.

Die Gleitfallschirme bzw. Gleitflügel können steuerbar ausgebildet sein, z.B. durch die Betätigung von Steuerleinen mittels denen gewisse Partien der Schirmfläche beeinflusst werden.

Von besonderer Bedeutung ist für die Ausbildung derartiger Schirme die Verbesserung der Gleitleistung und ebenso die Stabilität der Form des Schirms während des Gleitfluges.

Es sind Ausbildungen von Gleitfallschirmen bekannt, die mittels oberer und unterer Bahnen in Richtung der Flügeltiefe verlaufende Stauluftkammern aufweisen, die gegen die Anströmung offen sind. Die einströmende Luft spreizt die oberen und unteren Bahnen zu einem Tragflügelprofil auseinander, wobei die Stauluftkammern in ihrem hinteren Ende Abströmöffnungen für einen Teil der gestauten Luft aufweisen.

Die Schirmvorderkanten, gebildet durch die vorderen Enden der oberen bzw. unteren Bahnen, können jedoch unter bestimmten Anströmbedingungen nicht formstabil gehalten werden. Insbesondere dann, wenn derartige Schirme hohe Fluggeschwindigkeiten (z.B. ungefähr 30 m/sec) erreichen sollen, ergeben sich Schwierigkeiten in der Aufrechterhaltung der Profilform, insbesondere im Bereich der Profilnase derartiger Schirme.

Hohe Fluggeschwindigkeiten lassen sich nur über eine entsprechend hohe Flächenbelastung erzielen.

Es ist ferner bekannt (US-A-3 412 963), Vorderkanten von Gleitfallschirmen zur Bildung der Profilvorderkante aufblasbar zu gestalten bzw. den vorderen Abschnitt des Gleitfallschirmes aus zusammendrückbaren Kunststoff-Formmaterial zu bilden.

Aufgabe der vorliegenden Erfindung ist es, bisher bekannte Ausbildungen von Gleitfallschirmen bzw. Drachenfluggeräten zu verbessern, so dass eine gute Stabilität des flexiblen Flügels gegen ein Einknicken, insbesondere des vorderen Bereichs des Flügels, bei gleichzeitig verbesserter Gleitleistung erreicht wird.

Diese Aufgabe wird bei einer gattungsgemässen Einrichtung durch die kennzeichnenden Merkmale des Anspruchs 1 gelöst.

Die erfindungsgemässe Ausbildung ermöglicht mittels der oberhalb und unterhalb des Formkörpers angeordneten Lufteintrittsöffnungen, in Verbindung mit den die Öffnungen überspannenden und mit den oberen und unteren Gewebebahnen der Schirmober- und Schirmunterseite verbundenen, luftdurchlässigen Gewebebahnen in jeder Anstellwinkellage gegenüber der Anströmung einen ungehinderten, sicheren Lufteintritt in die Stauluftkammern und damit eine sichere Formhaltung.

Zu dieser vorteilhaften Wirkung trägt ferner die grossflächige Umspannung des Formkörpers durch die luftdurchlässigen Gewebebahnen bei. Die erfindungsgemässe Ausbildung erlaubt auch die Unterbringung solcher Gleitfallschirme auf kleinstem Raum. Schliesslich wird eine einfache, sichere Aufnahme und Halterung des Formkörpers mittels der Seitenstege und der luftdurchlässigen Gewebebahnen erzielt.

In der Zeichnung sind Ausführungsbeispiele der Erfindung dargestellt und im folgenden näher beschrieben.

In der Zeichnung zeigt:

Figur 1 den Gleitfallschirm in einer perspektivischen Ansicht,

Figur 2 einen Ausschnitt des vorderen Bereiches des Gleitschirmes gemäss Figur 1, quergeschnitten dargestellt,

Figur 3 eine Ansicht der Gleitschirmunterseite gemäss Figur 2 und

Figur 4 eine Einzelheit, betreffend die Druckerzeugungseinrichtung.

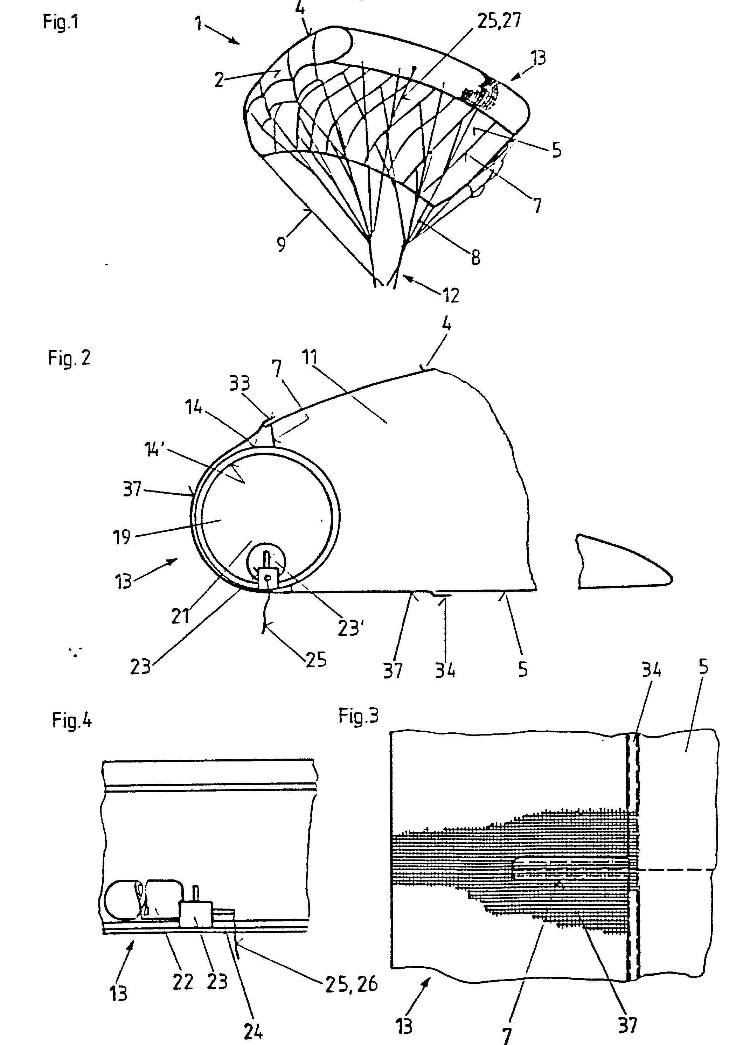

Der in Figur 1 gezeigte Gleitschirm 1 weist in bekannter Weise die insgesamt mit 2 bezeichnete Schirmkappe auf. Die Schirmkappe wird gebildet durch obere bzw. untere Bahnen 4 bzw. 5 zwischen denen sich von der Vorder- zur Hinterkante vertikal gerichtete Profilrippen 7 erstrecken, die mit den Bahnen vernäht sind. Die Profilrippen 7 in Verbindung mit den oberen bzw. unteren Bahnen 4 bzw. 5 bilden Stauluftkammern 11, die in ihrem vorderen Bereich, wie später noch näher erläutert, Lufteintrittsöffnungen besitzen. Es kann zweckmässig sein, dass die Stauluftkammern 11 im Bereich der Hinterkante des Gleitschirmes Luftaustrittsöffnungen für den Austritt eines Teiles der in den Kammern angestauten Luft enthalten. Die oberen bzw. unteren Bahnen werden also durch die in die Stauluftkammern 11 eingeleitete Strömung auseinandergespreizt, wobei die Profilrippen 7 die Profilform des Gleitschirmes bestimmen.

Mit der Schirmkappe 2 sind Tragleinen 8 verbunden, die an einem Traggeschirr 12 für die Aufnahme von Lasten befestigt sind. Für die Steuerung der Fluggeschwindigkeit bzw. die Durchführung eines Kurvenfluges sind ferner in bekannter Weise Steuerleinen 9 vorgesehen.

Wie aus den Figuren 1 und 2 zu erkennen ist, wird erfindungsgemäss der Vorderkantenbereich der Schirmkappe 2 durch einen sich in Spannweitenrichtung erstreckenden Formkörper 13 gebildet. Bei einer nicht dargestellten Ausführungsform besteht der Körper 13 aus gummielastischem Schaumstoff (Schaumgummi) und besitzt zylindrischen Querschnitt. Es kann zweckmässig sein, den Schaumstoffkörper als Hohlkörper auszubilden. Die oberen bzw. unteren Bahnen 4 bzw. 5 sowie die Profilrippen 7 sind mit dem Formkörper 13 fest verbunden.

Gemäss Figur 2 ist in einer weiteren Ausführungsform der Formkörper 13 gebildet aus einem zylinderförmigen, flexiblen Schlauchteil 14 mit seitlichen Abschlusswänden 19. Innerhalb des Schlauchteiles 14 ist ein druckdichter Einsatz 14' eingelegt, so dass der Schlauchteil 14 die Aussenkontur des Nasenteiles bestimmt und über den Einsatz 14' aufgebläht wird. Der Schlauchteilinnenraum 21 dient zur Aufnahme eines Drucklufterzeugers 22, der über ein Ventil 23 und eine Ventilbetätigung 24 sowie einen Zuführungsschlauch 23' an den Schlauchteilinnenraum 21 anschliessbar ist. Mittels einer Reißleine 25, die über eine Anlenkung 26 am Ventil 23 und eine Anlenkung 27 am Traggeschirr 12 angeschlossen ist, wird eine selbsttätige Öffnung des Ventils bei Entfaltung des Schirmes 1 bewirkt.

Die unteren und oberen Bahnen 5 bzw. 4 sind im Bereich des Formkörpers 13 mit einem luftdurchlässigem Gewebeteil 37 über Nähte 33 bzw. 34 verbunden, so, dass die Strömung sowohl oberhalb als auch unterhalb des Formkörpers 13 in die Stauluftkammern 11 einzutreten vermag, um den Schirm 1 im aufgeblähtem Zustand zu halten. Das Gewebeteil 37 überspannt von den oberen zu den unteren Bahnen 4 bzw. 5 den Formkörper 13.

Der erfindungsgemässe Formkörper 13 ist auch bei drachenförmigen Fluggeräten als Nasenteil einsetzbar, wobei bei diesen Fluggeräten anstelle der Tragleinen 8 an beiden äusseren Enden Leinen befestigt sind, welche an ihren freien Enden an das Traggeschirr für die Aufnahme von Lasten anschliessen. Der Drachenflügel stellt sich in Abhängigkeit von der Anströmung selbsttätig in die erforderliche Anstellwinkellage ein.

Auch bei hohen Gleitgeschwindigkeiten wird mit dem Formkörper 13 ein Einknicken des vorderen Bereiches des Gleitschirmes bzw. des Drachenflügels vermieden und eine ausreichende Kappenstabilität (Nasenstabilität) erzielt. Die Gleitleistungen lassen sich damit wesentlich verbessern.

Ausserdem ist die Zusammenlegbarkeit des Gleitschirmes nicht oder nur in geringem Masse durch die Anordnung des Formkörpers beeinträchtigt. Ferner lässt sich die Anzahl der Tragleinen und damit der Luftwiderstand verringern.

**Patentansprüche**

1. Gleitfallschirm, mit aus flexiblem Werkstoff gebildeten, die Gleitfallschirmvorderkante bzw. -hinterkante einschliessenden Gewebebahnen (4 bzw. 5), mit durch die Gewebebahnen und zwischen diesen angeordnete Seitenstege (7) gebildeten Stauluftkammern (11), mit Einströmöffnungen gegen die Anströmrichtung und die Öffnungen überspannenden Gewebebahnen, sowie einem sich in Spannweitenrichtung erstreckenden, formstabilen, jedoch in seinem Volumen verringerbaren, die Profilnase bildenden Formkörper, dadurch gekennzeichnet, dass

a) oberhalb und unterhalb des Formkörpers (13) Einlaßöffnungen für die Stauluftkammern (11) gebildet sind, dass

b) luftdurchlässige Gewebebahnen (37) den Formkörper (13) im Bereich seiner Anströmseite und die oberen und unteren Lufteinlaßöffnungen überspannen und mit den oberen und unteren Bahnen (4 bzw. 5) der Schirmoberseite bzw. Schirmunterseite verbunden sind und dass

c) der Formkörper (13) durch die Seitenstege (7) der Stauluftkammern (11) stromab am Gleitfallschirm (1) fixiert ist.

2. Gleitfallschirm nach Anspruch 1, dadurch gekennzeichnet, dass der Formkörper (13) eingespannt ist zwischen den luftdurchlässigen Gewebebahnen (37) einerseits und den in Richtung der profiltiefe verlaufenden Seitenstege (7) der Kammern (11) andererseits.

**Claims**

1. Paraglider, comprising upper and lower sheets (4 and 5), of flexible material surrounding the leading edge and trailing edge of the paraglider, ram air chambers (11), established through the flexible sheets (4 and 5) in conjunction with chord wise directed rips (7) extending from the front or leading edge to the trailing edge, entrance openings in the frontal portion open towards the oncoming flow enveloped through an air and comprising a flexible particularly contoured body (13) defining the leading edge and nose of the paraglider having as whole an adequate shape stability and being variable as to its volume characterised in that

a) the entrance openings for the ram air chambers (11) are provided at the upper and lower part of the contoured body (13),

b) an air permeable webbing (37) partially envelopes the nose defining body (13) and the upper and lower entrance openings, whereby the webbing (37) is interconnected with the upper and lower sheets (4 and 5), respectively of the top and bottom side to the paraglider, and

c) the contoured body (13) is fixed by the rips (7) to the paraglider (1).

2. Paraglider as defined in claim 1 in which the body (13) is fastened between the air permeable webbing (37) and the chord wise directed rips (7).

**Revendications**

1. Parachute planant, avec des bandes de tissu (4 et respectivement 5) réalisées en un matériau flexible et enveloppant le bord d'attaque ou le bord de fuite du parachute planant, avec des caissons de retenue d'air (11) conformés par les bandes de tissu et des nervures latérales (7) disposées entre celles-ci, avec des orifices d'entrée en sens inverse de la direction de l'écoulement de l'air et avec des bandes de tissu recouvrant les ouvertures, ainsi qu'avec un corps moulé formant le nez de profil qui s'étend dans le sens de l'envergure, qui est indéformable mais dont le volume peut être réduit, <u>caractérisé en ce que</u>

a) des entrées d'air pour les caissons de retenue d'air (11) sont formées au-dessus et en dessous du corps moulé (13),

b) des bandes de tissu perméables à l'air (37) recouvrent le corps moulé (13) dans la région du côté de l'arrivée d'air ainsi que les entrées d'air supérieures et inférieures et qu'elles sont reliées aux bandes supérieures et inférieures (4 et respectivement 5) de la face supérieure ou inférieure de la voilure, et que

c) le corps moulé (13) est fixé par les nervures latérales (7) des caissons de retenue d'air (11) sur le parachute planant, du côté aval.

2. Parachute planant selon la revendication 1, caractérisé en ce que le corps moulé (13) est inséré entre les bandes de tissu perméables à l'air (37) d'une part et les nervures latérales (7) des caissons (11) orientées dans le sens de la profondeur du profil, d'autre part.

Fig.1

Fig. 2

Fig.4

Fig.3